# EUROPEAN PATENT SPECIFICATION

(11) **EP 3 617 540 B1**
(45) Date of publication and mention of the grant of the patent: **05.05.2021**
(21) Application number: 19193518.8
(22) Date of filing: 26.08.2019
(51) Int. Cl.: F16D 13/56, F16D 25/0638, F16D 25/08

(54) **INTERNAL COMBUSTION ENGINE**
VERBRENNUNGSMOTOR
MOTEUR À COMBUSTION INTERNE

(30) Priority: 30.08.2018 JP 2018162094
(43) Date of publication of application: 04.03.2020
(73) Proprietor: Honda Motor Co., Ltd., Tokyo 107-8556 (JP)
(72) Inventor: Sakuyama, Hisashi, Saitama, 351-0024 (JP)
(74) Representative: Kiwit, Benedikt

(56) References cited:
- EP-A2- 2 175 153
- WO-A1-2014/170926
- DE-T5-112014 001 765
- JP-A- 2005 308 092
- JP-U- S5 355 051

## Description

### [TECHNICAL FIELD]

The present invention relates to a friction clutch comprising: a driving power transmitting shaft rotatably supported to a crankcase and extending outside from the crankcase, the driving power transmitting shaft having a tip end covered with a clutch cover joined to the crankcase; an outer member located between the crankcase and the clutch cover, and supported relatively rotatable to the driving power transmitting shaft; a center member supported relatively unrotatable to the driving power transmission shaft inside the outer member; friction members supported to the respective outer member and center member relatively displaceable in an axis direction, a mutual contact in the friction members providing a friction force to transmit a rotational force from the outer member to the center member.

### [BACKGROUND ART]

JP 2014 - 162 269 A describes a clutch release mechanism incorporated into a friction clutch to cut off transmission of a rotational force from an outer member to a center member. The clutch release mechanism includes a pressure member and a push rod. The pressure member is supported to the center member between a first position and a second position to be relatively displaceable in an axis direction. A mutual contact in friction members is restrained by receiving an elastic force from a clutch spring at the first position. The friction members are released from the mutual contact against the elastic force at the second position. The push rod is located within a driving power transmitting shaft to be relatively displaceable in an axis direction. The push rod forcibly displaces the pressure member from the first position to the second position according to the axial displacement. When the push rod is operated, the axial displacement of the push rod acts on the pressure member. Against the elastic force from the clutch spring, the pressure member is displaced from the first position to the second position, and the friction members are released from the mutual contact.

JP 2005 - 308 092 A describes a multi-plate type clutch device with a driving power transmitting shaft, an outer member and the clutch cover, a center member, friction members supported to the respective outer member and center member, a pressure member, a spring member, the friction members being released, at the second position, from the mutual contact against the elastic force; a manipulation member located between the crankcase and the clutch cover to be relatively displaceable in the axis direction.

DE112014001765T T5 discloses a similar arrangement.

JPS5355051U on the other hand discloses a clutch device wherein a lifter plate member is coupled to a center member in the axis direction at a first distance, the lifter plate member being coupled to the pressure member in the axis direction at a second distance, the first distance being shorter than the second distance.

### [SUMMARY OF THE INVENTION]

### [PROBLEM TO BE SOLVED BY THE INVENTION]

In the friction clutch described in JP 2014 - 162 269 A, a tip end of the push rod (manipulation member) projects from a main shaft (driving power transmitting shaft) and is joined to be rotatable relatively to the pressure member. When the push rod is displaced, a driving power in the axis direction exceeding the elastic force from the clutch spring is required for the push rod. Reducing load acting on the push rod allows reducing weights of components under the load and also allows reducing the driving power applied to the push rod.

The present invention has been made in consideration of the above-described actual situation, and an object of the present invention is to provide an internal combustion engine that allows weight reduction of components incorporated into a friction clutch and contribution to a reduction in driving power applied to a manipulation member.

### [MEANS TO SOLVE THE PROBLEMS]

In order to achieve the object, according to a first aspect of the present invention, there is provided an internal combustion engine comprising: a driving power transmitting shaft rotatably supported to a crankcase and extending outside from the crankcase, the driving power transmitting shaft having a tip end covered with a clutch cover joined to the crankcase; an outer member located between the crankcase and the clutch cover, and supported relatively rotatable to the driving power transmitting shaft; a center member supported relatively unrotatable to the driving power transmission shaft inside the outer member; friction members supported to the respective outer member and center member relatively displaceable in an axis direction, a mutual contact in the friction members providing a friction force to transmit a rotational force from the outer member to the center member; a pressure member supported to the center member between a first position and a second position to be relatively displaceable in the axis direction, the mutual contact in the friction members being restrained at the first position by receiving an elastic force from a spring member, the friction members being released, at the second position, from the mutual contact against the elastic force; and a manipulation member located between the crankcase and the clutch cover to be relatively displaceable in the axis direction, the manipulation member forcibly displacing the pressure member from the first position to the second position according to the axial displacement, wherein the internal combustion engine further comprises a lifter plate member coupled to the center member in the axis direction at a fulcrum that is away by a first distance from a force point at which a displacement of the manipulation member is received, the lifter plate member being coupled to the pressure member in the axis direction at an acting point that is away from the fulcrum by a second distance shorter than the first distance.

According to a first preferred embodiment of the present invention, in addition to the first aspect, the center member includes a first restricting portion and a second restricting portion, the first restricting portion supporting a radial outer edge of the lifter plate member, forming the fulcrum, and restricting a radial displacement of the lifter plate member, the second restricting portion contacting each of right and left edges of the lifter plate member radially inside the fulcrum to restrict the displacement of the lifter plate member in a rotation direction.

According to a second preferred embodiment of the present invention, the second restricting portion is disposed on a boss formed in the center member, the boss supporting a bolt that fastens the spring member to the center member.

According to a third preferred embodiment of the present invention, the center member includes a tubular body made of an aluminum-based material and a collar member made of an iron-based material, the tubular body supporting the friction members from radially inside, the collar member being joined to the tubular body and including the second restricting portion.

According to a fourth preferred embodiment of the present invention, the center member further includes a flange member made of an iron-based material, the flange member being joined to the tubular body with fastening members located in alternation with bosses as said boss in a peripheral direction, the friction members being sandwiched between the flange member and the pressure member..

### [EFFECTS OF THE INVENTION]

According to the present invention, when the pressure member is positioned at the first position receiving the elastic force from the spring member, the mutual contact in the friction members is established, and the driving power is transmitted from the outer member to the center member. The driving power transmitting shaft rotates according to the driving power input to the outer member. When the manipulation member is axially displaced, while the lifter plate members are axially restrained at the fulcrums, the lifter plate members receive the displacement of the manipulation member at the force point and transmit the displacement to the pressure member from the acting point. The pressure member is displaced against the elastic force from the spring member from the first position to the second position, thus releasing the friction members from the mutual contact. The transmission of the rotational force from the outer member to the center member is cut off. The driving power transmitting shaft is released from the driving power. At this time, the distance from the fulcrum to the acting point is shorter than the distance from the fulcrum to the force point; therefore, a load received at the force point decreases compared with the elastic force from the spring member received at the acting point. In association with the decrease in load, the manipulation member and the other components under the load can be reduced in weight. The driving power given to the manipulation member can also be reduced. Here, the outer member, the center member, the friction members, the pressure member, the manipulation member, and the lifter plate members form the friction clutch.

According to the first preferred embodiment of the present invention, since the lifter plate member includes the radial outer edge, which receives a centrifugal force load in the redial direction, and the right and left edges that receive the rotational force at the positions different from the radial outer edge, the load acting on the lifter plate member can be dispersed and reduced. Consequently, operativeness and durability of the friction clutch can be improved.

According to the second preferred embodiment of the present invention, since the boss is used to form the second restricting portion, which restricts the displacement of the lifter plate member in the rotation direction, when the lifter plate members are located, a complicated structure and an increase in weight of the center member can be avoided.

According to the third preferred embodiment of the present invention, thus forming a part of the clutch hub by the aluminum-based material achieves the weight reduction of the clutch hub. Additionally, the collar members made of the iron-based material in contact with the pressure member and the lifter plates sufficiently secure strength of the clutch hub. Thus, the operativeness and the durability of the friction clutch are improved.

According to the fourth preferred embodiment of the present invention, the flange member made of the iron-based material in contact with the friction members sufficiently secures strength of the center member. Thus, the operativeness and the durability of the friction clutch can be improved.

### [BRIEF DESCRIPTION OF THE DRAWINGS]

[FIG. 1] FIG. 1 is a side view schematically illustrating an overall configuration of a two-wheeled motor vehicle (saddle riding vehicle) according to one embodiment of the present invention.
[FIG. 2] FIG. 2 is an enlarged side view of an internal combustion engine.
[FIG. 3] FIG. 3 is an enlarged sectional view of the internal combustion engine observed on a cut surface including a rotation axis of a crankshaft, an axis of a main shaft, and an axis of a counter shaft.
[FIG. 4] FIG. 4 is an enlarged plan view schematically illustrating a relationship among a lifter member, lifter plates, and an annular supporting member.
[FIG. 5] FIG. 5 is an enlarged part perspective view of the lifter plate and the annular supporting member schematically illustrating configurations of first restricting portions.

### [MODE FOR CARRYING OUT THE INVENTION]

The following describes one embodiment of the present invention with reference to the attached drawings. Here, up and down, front and rear, and right and left of a vehicle body are specified based on an eye line of an occupant getting on a two-wheeled motor vehicle.

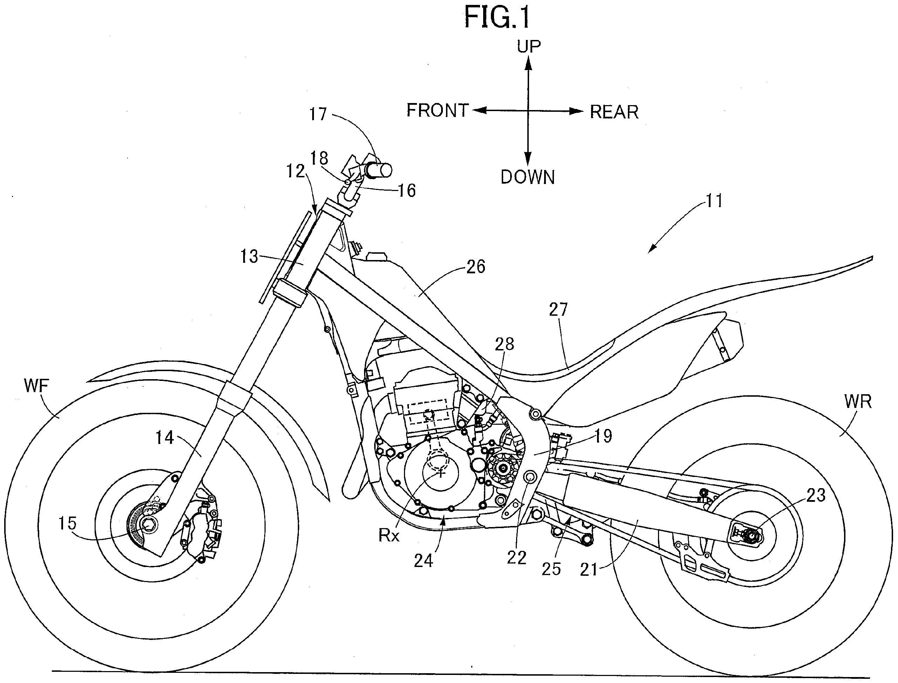

FIG. 1 schematically illustrates an overall configuration of the two-wheeled motor vehicle (saddle riding vehicle) 11 according to one embodiment of the present invention. The two-wheeled motor vehicle 11 includes a body frame 12. A front fork 14 is steerably supported to a head tube 13 on a front end of the body frame 12. A front wheel WF is rotatably supported to the front fork 14 around an axle shaft 15.

To the front fork 14, a handlebar 16 is joined to the upper side of the head tube 13. Grips 17 are fixed to both ends of the handlebar 16. A clutch lever 18 is installed on the front of the left grip 17. While the left hand is tangled in the left grip 17, an occupant can grip the clutch lever 18 with the left hand.

On the rear side of the body frame 12 and on a pivot frame 19, a swing arm 21 is swingably supported around a pivot 22 horizontally extending in a vehicle width direction. A rear wheel WR is supported to the rear end of the swing arm 21 to be rotatable around an axle shaft 23.

An internal combustion engine 24 is mounted to the body frame 12 between the front wheel WF and the rear wheel WR. The internal combustion engine 24 generates a power around a rotation axis Rx. The power from the internal combustion engine 24 is transmitted to the rear wheel WR through a power transmission device 25. Note that there may be a case in this description that a description of a configuration similar to that of the known internal combustion engine will be omitted.

A fuel tank 26 that stores fuel is mounted to the body frame 12 upward of the internal combustion engine 24. An occupant seat 27 is mounted at the rear of the fuel tank 26 on the body frame 12. The fuel is supplied from the fuel tank 26 to a fuel injection device 28 in the internal combustion engine 24. The occupant straddles the occupant seat 27 for driving of the two-wheeled motor vehicle 11.

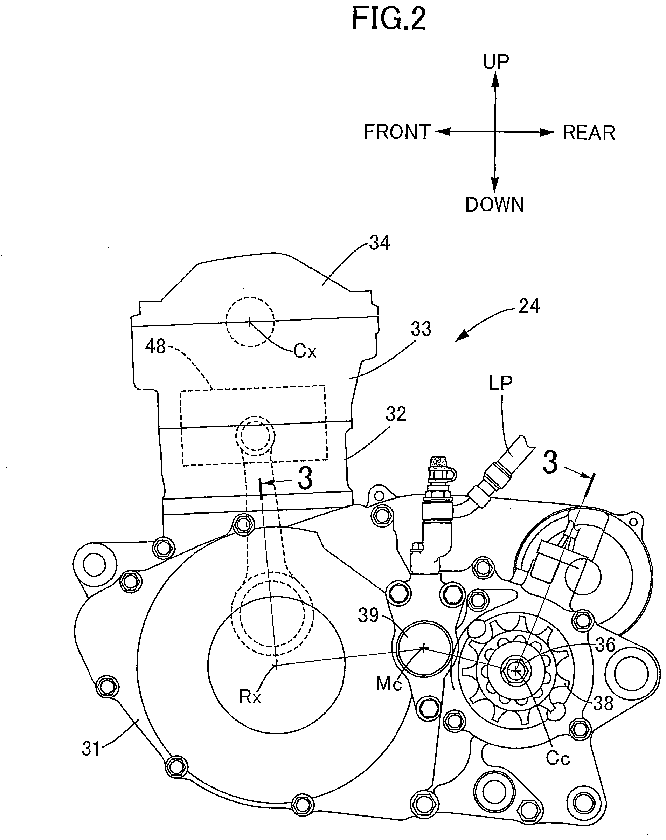

As illustrated in FIG. 2, the internal combustion engine 24 includes a crankcase 31, a cylinder block 32, a cylinder head 33, and a head cover 34. The crankcase 31 is coupled to the body frame 12 and supports a crankshaft which generates the power around the rotation axis Rx. The cylinder block 32 is joined to the crankcase 31 so as to stand from the crankcase 31. The cylinder head 33 is joined to the upper end of the cylinder block 32 to support an intake valve and an exhaust valve facing a combustion chamber. The head cover 34 is joined to the upper end of the cylinder head 33 and supports a camshaft between the head cover 34 and the cylinder head 33, the camshaft rotating around an axis Cx and controlling operations of the intake valve and the exhaust valve. As described later, the crankcase 31 houses a main shaft (driving power transmitting shaft) 35 rotatably supported around an axis Mc and a multistage transmission (hereinafter referred to as "transmission") 37, which includes a counter shaft 36 rotatably supported around an axis Cc. A sprocket 38 of the power transmission device 25 is fixed to be relatively unrotatable to a tip end, which projects from the crankcase 31, of the counter shaft 36.

To the crankcase 31, a cylinder casing 39 is coupled on an extended line of the main shaft 35. To the cylinder casing 39, a master cylinder (not illustrated) is coupled through an oil pipe LP. The master cylinder supplies hydraulic pressure into the cylinder casing 39 according to the grip manipulation of the clutch lever 18.

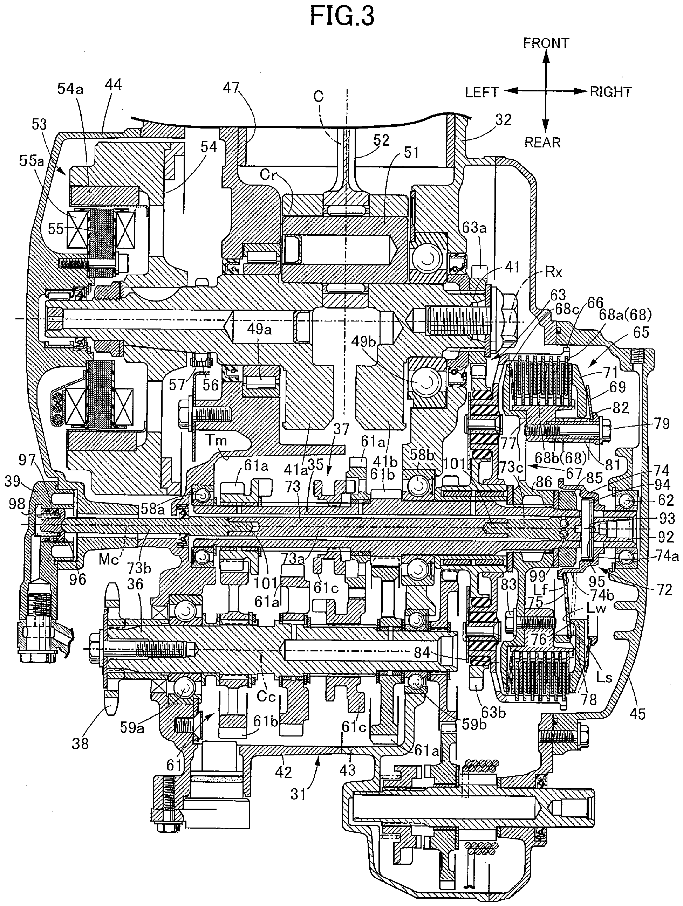

As illustrated in FIG. 3, the crankcase 31 includes a first case half body 42 and a second case half body 43 mutually joined by mating faces perpendicular to the rotation axis Rx of a crankshaft 41 and partitions a crank chamber Cr housing a crank of the crankshaft 41. To the first case half body 42, a left cover 44 is joined by mating faces perpendicular to the rotation axis Rx of the crankshaft 41. The left cover 44 partitions an electric generation chamber between the left cover 44 and the first case half body 42. To the second case half body 43, a right cover 45 is joined by mating faces perpendicular to the rotation axis Rx of the crankshaft 41. The right cover 45 partitions a clutch chamber between the right cover 45 and the second case half body 43.

A cylinder bore 47 is partitioned in the cylinder block 32. A piston 48 is slidably fitted to the cylinder bore 47 along a cylinder axis C (a center axis of the cylinder bore 47). The piston 48 partitions the combustion chamber between the piston 48 and the cylinder head 33. Air-fuel mixture is introduced into the combustion chamber according to open/close operations of the intake valve. Exhaust gas in the combustion chamber is discharged according to open/close operations of the exhaust valve. The cylinder block 32 guides a linear reciprocation motion of the piston 48.

The crankshaft 41 includes a first crank web 41a, a second crank web 41b, and a crank pin 51. The first crank web 41a is coupled to a bearing 49a incorporated into the first case half body 42 with a journal. The second crank web 41b is coupled to a bearing 49b incorporated into the second case half body 43 with a journal. The crank pin 51 extends parallel to the rotation axis Rx to mutually couple the first crank web 41a and the second crank web 41b together. The crank pin 51 forms a crank between the bearings 49a and 49b in cooperation with the first crank web 41a and the second crank web 41b. The crank chamber Cr houses the crank. To the crank pin 51, a large end portion of a connecting rod 52 extending from the piston 48 is rotatably coupled. The connecting rod 52 transforms the linear reciprocation motion of the piston 48 into a rotational motion of the crankshaft 41.

To the crankshaft 41, an alternating-current generator (ACG) 53 that generates electric power in response to the rotation of the crankshaft 41 is joined outside the bearing 49a. The ACG 53 includes an outer rotor 54 and an inner stator 55. The outer rotor 54 is fixed to the crankshaft 41, which passes through the first case half body 42 of the crankcase 31 and protrudes from the first case half body 42. The inner stator 55 is surrounded by the outer rotor 54 and located around the crankshaft 41. The inner stator 55 is fixed to the left cover 44. An electromagnetic coil 55a is wound around the inner stator 55. A magnet 54a is fixed to the outer rotor 54. A rotation of the outer rotor 54 relative to the inner stator 55 generates an electric power in the electromagnetic coil 55a.

To the crankshaft 41, a drive sprocket 56 of a valve train is fixed between the outer rotor 54 of the ACG 53 and the bearing 49a. An annular cam chain 57 is wound around the drive sprocket 56. The cam chain 57 transmits a rotative power of the crankshaft 41 to a camshaft in contact with a rocker arm driving the intake valve and the exhaust valve. Thus, the operations of the intake valve and the exhaust valve synchronize with the linear reciprocation motion of the piston 48.

] The transmission 37 is configured into a dog clutch type and is housed in a transmission chamber Tm, which is continuous with the crank chamber Cr and partitioned in the crankcase 31. The main shaft 35 and the counter shaft 36 are supported to the crankcase 31 to be rotatable with rolling bearings 58a, 58b; 59a, 59b. The axis Mc of the main shaft 35 and the axis Cc of the counter shaft 36 are configured parallel to an axis (rotation axis Rx) of the crankshaft 41. The main shaft 35 has a tip end projecting outside the second case half body 43 from the bearing 58b and is supported to the right cover 45 to be relatively rotatable. A bearing 62 rotatably supporting the tip end of the main shaft 35 is incorporated into the right cover 45.

A plurality of transmission gears 61 are supported to the main shaft 35 and the counter shaft 36. The transmission gears 61 located between the bearings 58a, 58b; 59a, 59b are housed in the transmission chamber Tm. The transmission gears 61 include a rotation gear 61a, a fixed gear 61b, and a shift gear 61c. The rotation gears 61a are supported to the main shaft 35 or the counter shaft 36 to be concentrically relatively rotatable. The fixed gears 61b are fixed to the main shaft 35 to be relatively unrotatable and mesh with the corresponding rotation gears 61a. The shift gears 61c are supported to the main shaft 35 or the counter shaft 36 to be relatively unrotatable and axially displaceable and mesh with the corresponding rotation gears 61a. The axial displacements of the rotation gears 61a and the fixed gears 61b are restricted. Coupling the shift gears 61c to the rotation gears 61a through the axial displacement restricts a relative rotation between the rotation gears 61a and the main shaft 35 or the counter shaft 36. When the shift gear 61c meshes with the fixed gear 61b in the other shaft, a rotative power is transmitted between the main shaft 35 and the counter shaft 36. Coupling the shift gear 61c to the rotation gear 61a meshing with the fixed gear 61b in the other shaft transmits a rotative power between the main shaft 35 and the counter shaft 36. Thus meshing the specific transmission gears 61 between the main shaft 35 and the counter shaft 36 transmits the rotative power from the main shaft 35 to the counter shaft 36 at a prescribed reduction gear ratio.

The main shaft 35 is coupled to the crankshaft 41 through a primary deceleration mechanism 63. The primary deceleration mechanism 63 includes a primary driving gear 63a and a primary driven gear 63b. The primary driving gear 63a is supported to the crankshaft 41, which projects from the crankcase 31, outside the bearing 49b. The primary driven gear 63b is supported to be relatively rotatable on the main shaft 35, which projects from the crankcase 31, outside the bearing 58b. The primary driven gear 63b meshes with the primary driving gear 63a. The primary driving gear 63a is fixed to the crankshaft 41 to be relatively unrotatable.

A friction clutch 65 is located between the second case half body 43 of the crankcase 31 and the right cover (clutch cover) 45 in the clutch chamber. The friction clutch 65 includes a clutch outer (outer member) 66 and a clutch hub (center member) 67. The clutch outer 66 is supported to the main shaft 35 to be relatively rotatable. The clutch hub 67 is supported to the main shaft 35 to be relatively unrotatable inside the clutch outer 66. To the clutch outer 66, the primary driven gear 63b of the primary deceleration mechanism 63 is coupled. Accordingly, the rotation of the crankshaft 41 causes a rotation of the clutch outer 66 around the axis Mc of the main shaft 35.

The friction clutch 65 includes friction members 68. The friction members 68 are supported to the respective clutch outer 66 and clutch hub 67 to be relatively displaceable in the axis direction, and a mutual contact in the friction members 68 provides a friction force and transmits the rotational force from the clutch outer 66 to the clutch hub 67. The friction members 68 include a plurality of friction plates 68a and a plurality of clutch plates 68b. The friction plates 68a are spline-connected to the clutch outer 66 to be relatively unrotatable around the main shaft 35 and include friction materials on the surfaces. The clutch plates 68b are located in alternation with the friction plates 68a in the axis direction and spline-connected to the clutch hub 67 to be relatively unrotatable around the main shaft 35. Establishing the mutual contact between the friction plates 68a and the clutch plates 68b transmits the rotational force from the primary driven gear 63b to the clutch hub 67 via the clutch outer 66. Releasing the friction plates 68a and the clutch plates 68b from the mutual contact generates a slip between both and the transmission of the rotational force is cut off.

To the clutch hub 67, a pressure member 71, which is annularly formed around the axis Mc of the main shaft 35, is supported between a first position and a second position to be relatively displaceable in the axis direction. The mutual contact between the friction plates 68a and the clutch plates 68b is restrained by receiving an elastic force from a spring member 69 at the first position. The friction plates 68a and the clutch plates 68b are released from the mutual contact against the elastic force from the spring member 69 at the second position. Among the friction members 68, the clutch plate 68b is located at a position closest (outermost) to the pressure member 71. The outermost clutch plate 68b is supported to the pressure member 71 by a plane perpendicular to the axis Mc of the main shaft 35 in the axis direction. The pressure member 71 prevents the friction plates 68a and the clutch plates 68b from inclining. Among the friction members 68, a damper plate 68c with a cork material pasted to a surface is located at a position farthest (innermost) from the pressure member 71. The damper plate 68c is supported to the clutch hub 67. The inclination prevention by the friction members 68 and a dumping effect by the cork material improve a disconnection performance by the friction clutch 65.

For the spring member 69, a disc spring annularly formed around the axis Mc of the main shaft 35 is employed. The disc spring has an inner edge engaged with the clutch hub 67 to one another. The disc spring has an outer edge pressed against the pressure member 71. The disc spring provides an elastic force to drive the pressure member 71 toward the damper plate 68c backed up by the clutch hub 67.

The friction clutch 65 includes a clutch release mechanism 72 that forcibly releases the friction plates 68a and the clutch plates 68b from the mutual contact against the elastic force from the spring member 69. The clutch release mechanism 72 includes a push rod 73, a lifter member (manipulation member) 74, and a lifter plate (lifter plate member) 75. The push rod 73 is inserted into the main shaft 35 along the axis (axis Mc) of the main shaft 35 and located inside the main shaft 35 to be relatively displaceable in the axis direction. The lifter member 74 is mounted to the outer periphery of the main shaft 35 to be relatively displaceable in the axis direction between the clutch hub 67 and the right cover 45 and displaced in the axis direction of the main shaft 35 in operative connection with the displacement of the push rod 73. The lifter plate 75 is coupled to the clutch hub 67 in the axis direction at a fulcrum Ls, which is away, by a first distance, from a force point Lf at which the displacement of the lifter member 74 is received, and is coupled to the pressure member 71 in the axis direction at an acting point Lw, which is away from the fulcrum Ls by a second distance shorter than the first distance. The lifter plate 75 engages with the lifter member 74 from the right cover 45 side by a radial inner edge and is supported to the clutch hub 67 from the right cover 45 side by a radial outer edge. On the pressure member 71, a linear protrusion 76 is formed. The protrusion 76 extends along a tangent that is tangent to the main shaft 35 in a circumferential direction around the axis Mc and contacts the lifter plate 75 between the radial inner edge and the radial outer edge. The radial inner edge of the lifter plate 75 functions as the force point Lf, the radial outer edge of the lifter plate 75 functions as the fulcrum Ls, and the protrusion 76 of the pressure member 71 functions as the acting point Lw. The pressure member 71 is forcibly displaced from the first position to the second position according to the axial displacement of the lifter member 74. The displacement of the lifter member 74 is decreased and then is transmitted to the pressure member 71.

The clutch hub 67 includes a tubular body 77, an annular supporting member 78, a plurality of (here, eight) collar members 81, a restraining plate 82, and a flange member 84. The tubular body 77 has a spline on the outer periphery and supports the clutch plates 68b from radially inside. The annular supporting member 78 is annularly formed around the axis Mc of the main shaft 35, stacked to the tubular body 77 in the axis direction, and supports the radial outer edge of the lifter plate 75. The collar members 81 are supported to the annular supporting member 78, form a boss for each bolt 79 fastening the spring member 69 to the tubular body 77, and guide the axial displacement of the pressure member 71. The restraining plate 82 is annularly formed around the axis Mc of the main shaft 35, stacked to the collar members 81 in the axis direction, and restrains the spring member 69 toward the pressure member 71. The flange member 84 is joined to the tubular body 77 with bolts (fastening members) 83, which are peripherally located in alternation with the bosses (collar members 81) and screwed into the tubular body 77, and the friction members 68 are sandwiched between the flange member 84 and the pressure member 71. The bolts 79 pass through the restraining plate 82, the collar members 81, and the annular supporting member 78 in order and are screwed into the tubular body 77 to join the restraining plate 82, the collar members 81, and the annular supporting member 78 to the tubular body 77 together. A support cylinder 86 is integrally formed with the flange member 84. The support cylinder 86 is mounted to the main shaft 35, spline-conected to the main shaft 35, and is fastened with a nut member 85, which is screwed with the main shaft 35, to be relatively undisplaceable in the axis direction. The tubular body 77 is molded of an aluminum-based material such as an aluminum alloy. The collar members 81 and the flange member 84 are each molded of an iron-based material such as carbon steel.

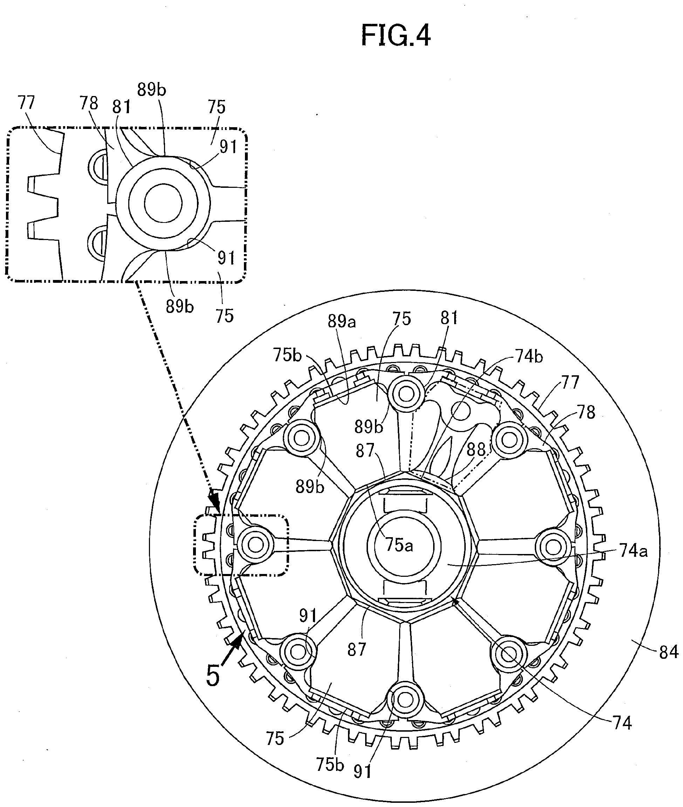

The lifter member 74 includes a bearing portion 74a and an extension portion 74b. The bearing portion 74a forms a cylindrical surface slidably in contact with the outer periphery of the main shaft 35. The extension portion 74b is continuous from the bearing portion 74a to the crankcase 31 and forms a space between the extension portion 74b and the outer periphery of the main shaft 35. The extension portion 74b houses the nut member 85. As illustrated in FIG. 4, a plane 87 supporting radial inner edges 75a of the lifter plates 75 partitioned by tangents is formed on the outer periphery of the extension portion 74b in the radial direction. Here, the eight lifter plates 75 are equally located around the axis Mc of the main shaft 35. A projecting piece 88 expanding radially outside from the plane 87 and axially supporting the radial inner edge 75a of the lifter plate 75 is integrally formed with an end of the extension portion 74b on the clutch hub 67 side.

The annular supporting member 78 in the clutch hub 67 forms first restricting portions 89a that support radial outer edges 75b of the lifter plates 75 partitioned by the tangents, forms the fulcrum Ls of the lifter plates 75, and restricts the radial displacement of the lifter plates 75. The collar members 81 form second restricting portions 89b that contact the right and left edges of the lifter plates 75 radially inside with respect to the fulcrum Ls and restrict the displacement of the lifter plates 75 in the rotation direction. The lifter plate 75 is formed with a recess 91 depressed from the edge following the cylindrical surface of the collar member 81.

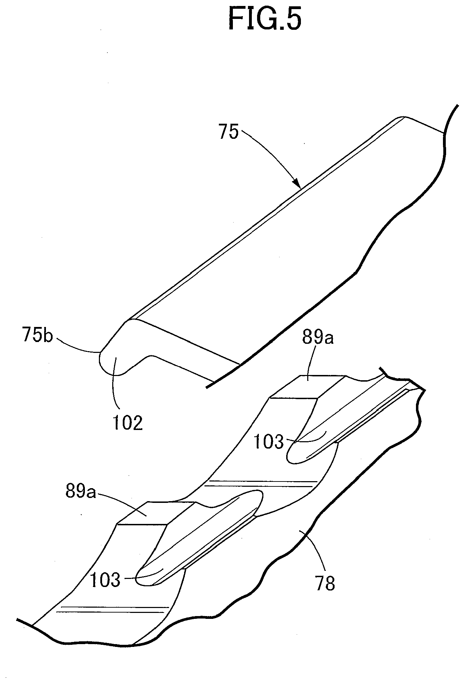

As illustrated in FIG. 5, the lifter plate 75 includes a fulcrum body 102, which bulges from the surface of the lifter plate 75 and linearly extends along the radial outer edge 75b of the lifter plate 75. The fulcrum body 102 is formed of a semi-cylindrical body partitioned by a generating line parallel to the radial outer edge 75b of the lifter plate 75. The first restricting portions 89a have long grooves 103. The long grooves 103 linearly extend around the axis Mc of the main shaft 35 in a tangent direction and receive the fulcrum body 102 of the lifter plate 75. The fulcrum body 102 is supported into the long grooves 103 to be rotatable around an axis of the semi-cylindrical body. Since both ends of the long grooves 103 are open, an axial displacement of the fulcrum body 102 is not restrained along the radial outer edge 75b of the lifter plate 75.

As illustrated in FIG. 4, in the second restricting portion 89b, the recess 91 draws a circular arc having a curvature smaller than that of the cylindrical surface of the collar member 81. Accordingly, the lifter plate 75 is in line contact with the collar member 81 on a line in a thickness direction. A clearance is formed between the lifter plate 75 and the collar member 81 except for the region of the line contact. Thus, the rotation of the lifter plate 75 around the fulcrum body 102 is not inhibited by the contact between the lifter plate 75 and the collar member 81 but is permitted.

As illustrated in FIG. 3, the clutch release mechanism 72 includes a lifter piece 92. The lifter piece 92 is located inside the main shaft 35 concentrically with the push rod 73 to be relatively displaceable in the axis direction and coupled to the tip end of the push rod 73 to be relatively rotatable around the rotation axis (axis Mc) of the main shaft 35. A through-hole 93 shaped in a cylindrical space in the radial direction is penetrated into the lifter piece 92. Into the through-hole 93, a pin member 94 radially projecting from the outer periphery of the main shaft 35 between the clutch hub 67 and the right cover 45 is inserted. The bearing portion 74a in the lifter member 74 has a groove 95 that receives the pin member 94 projecting from the outer periphery of the main shaft 35. The pin member 94 is covered with the lifter member 74 where the lifter member 74 is relatively unrotatable around the axis Mc of the main shaft 35. The elastic force from the spring member 69 acts on the pressure member 71 to drive the lifter member 74 toward the clutch hub 67. The work of the spring member 69 pushes the lifter piece 92 against the tip end of the push rod 73. Thus, the lifter piece 92 is coupled to the push rod 73. The lifter member 74 transmits the axial displacement of the pin member 94 to the pressure member 71. According to the axial displacement of the push rod 73, the pressure member 71 is forcibly displaced from the first position to the second position.

The clutch release mechanism 72 includes a hydraulic piston 97. The hydraulic piston 97 is housed in a hydraulic cylinder 96, which is partitioned inside the cylinder casing 39, to be displaceable in the axis direction of the main shaft 35. To the hydraulic piston 97, the push rod 73 is coupled to be relatively rotatable around the rotation axis (axis Mc) of the main shaft 35. The work of the elastic force from the spring member 69 pushes the push rod 73 against the hydraulic piston 97. Supplying the hydraulic pressure from the master cylinder to a hydraulic chamber 98 displaces the push rod 73 toward the right cover 45 against the elastic force from the spring member 69.

The push rod 73 includes a main shaft 73a, a first end shaft 73b, and a second end shaft 73c. The first end shaft 73b is concentrically coupled to the main shaft 73a by one end of the main shaft 73a to form a semi-spherical surface in contact with the hydraulic piston 97. The second end shaft 73c is concentrically coupled to the main shaft 73a by the other end of the main shaft 73a to form an annular groove 99 where spherical bodies are sandwiched between the annular groove 99 and the lifter piece 92. All of the main shaft 73a, the first end shaft 73b, and the second end shaft 73c are formed into a shaft body having a section with a circular shape. In the first end shaft 73b and the second end shaft 73c, a small-diameter shaft 101 fitted to a fitting hole formed in the end portion of the main shaft 73a is integrally formed. Thus, the push rod 73 is divided into three bodies, thereby ensuring highly accurately processing the end portion of the push rod 73.

The following describes operations of this embodiment. When the clutch lever 18 is released from an external force to open the hydraulic chamber 98 in the cylinder casing 39, the elastic force from the spring member 69 acts to the push rod 73 via the pressure member 71, lifter plates 75, lifter member 74, pin member 94, and lifter piece 92. Accordingly, the pressure member 71 receiving the elastic force from the spring member 69 is held at the first position. The mutual contact between the friction plates 68a and the clutch plates 68b is established, and the driving power is transmitted from the clutch outer 66 to the clutch hub 67. The main shaft 35 rotates according to the driving power input to the clutch outer 66.

Manipulating the clutch lever 18 while the two-wheeled motor vehicle is motionless and for shifting gears of the transmission 37, the hydraulic pressure is supplied from the master cylinder to the cylinder casing 39. A pressure in the hydraulic chamber 98 increases and the hydraulic piston 97 drives the push rod 73 toward the right cover 45. The displacement of the push rod 73 causes the displacement of the lifter member 74 via the lifter piece 92 and the pin member 94. When the lifter member 74 is axially displaced, while axially restrained at the fulcrum Ls, the lifter plates 75 receive the displacement of the lifter member 74 at the force point Lf and transmit the displacement to the pressure member 71 from the acting point Lw. The pressure member 71 is displaced against the elastic force from the spring member 69 from the first position to the second position, thus releasing the mutual contact between the friction plates 68a and the clutch plates 68b. The transmission of the rotational force from the clutch outer 66 to the clutch hub 67 is cut off. The main shaft 35 is released from the driving power. According to the manipulation of the clutch lever 18, connection and disconnection are switched between the clutch outer 66 and the clutch hub 67 in the friction clutch 65.

With the friction clutch 65 according to the embodiment, the distance from the fulcrum Ls to the acting point Lw is shorter than the distance from the fulcrum Ls to the force point Lf; therefore, a load received at the force point Lf decreases compared with the elastic force from the spring member 69 received at the acting point Lw. In association with the decrease in load, the components under the load, such as the lifter member 74, pin member 94, lifter piece 92, and push rod 73 can be reduced in weight. The driving power given to the lifter member 74 is also reduced.

In this embodiment, the clutch hub 67 includes the first restricting portions 89a and the second restricting portions 89b. The first restricting portions 89a support the radial outer edges 75b of the lifter plates 75, form the fulcrums Ls, and restrict the radial displacement of the lifter plates 75. The second restricting portions 89b contact the right and left edges of the lifter plates 75 radially inside the fulcrums Ls to restrict the displacement of the lifter plates 75 in the rotation direction. Since the lifter plate 75 includes the radial outer edge 75b, which receives a centrifugal force load in the redial direction, and the right and left edges (recesses 91) that receive the rotational force at the positions different from the radial outer edge 75b, the load acting on the lifter plate 75 is dispersed and reduced. Consequently, operativeness and durability of the friction clutch 65 are improved.

The second restricting portion 89b is disposed on the boss (collar member 81) that is formed in the clutch hub 67 and supports the bolt 79 which fastens the spring member 69 to the clutch hub 67. Since the boss is used to form the second restricting portion 89b, which restricts the displacement of the lifter plate 75 in the rotation direction, when the lifter plates 75 is located, a complicated structure and an increase in weight of the clutch hub 67 can be avoided.

In the friction clutch 65, the clutch hub 67 includes the tubular body 77 made of the aluminum-based material, such as aluminum alloy, that supports the clutch plates 68b from radially inside, and the collar members 81 made of the iron-based material, such as carbon steel, that are joined to the tubular body 77 and include the second restricting portions 89b. Thus forming a part of the clutch hub 67 by the aluminum-based material achieves the weight reduction of the clutch hub 67. Additionally, the collar members 81 made of the iron-based material in contact with the pressure member 71 and the lifter plates 75 sufficiently secure the strength of the clutch hub 67. Thus, the operativeness and the durability of the friction clutch 65 are improved.

In this embodiment, the clutch hub 67 further includes the flange member 84 made of an iron-based material, such as carbon steel. The flange member 84 is joined to the tubular body 77 with bolts 83, which are located in alternation with bosses in a peripheral direction, and the friction members 68 is sandwiched between the flange member 84 and the pressure member 71. The flange member 84 made of the iron-based material in contact with the friction members 68 sufficiently secures the strength of the clutch hub 67. Thus, the operativeness and the durability of the friction clutch 65 are improved.

### [DESCRIPTION OF REFERENCE NUMERALS AND SYMBOLS]

- 24...: Internal combustion engine
- 31...: Crankcase
- 35...: Driving power transmitting shaft (main shaft)
- 45...: Clutch cover (right cover)
- 66...: Outer member (clutch outer)
- 67...: Center member (clutch hub)
- 68...: Friction members
- 69...: Spring member
- 71...: Pressure member
- 74...: Manipulation member (Lifter member)
- 75...: Lifter plate
- 75b...: Radial outer edge
- 77...: Tubular body
- 79...: Bolt
- 81...: Collar member as boss
- 83...: Fastening member (bolt)
- 84...: Flange member
- 89a...: First restricting portion
- 89b...: Second restricting portion
- Lf...: Force point
- Ls...: Fulcrum
- Lw...: Acting point

## Claims

1. An internal combustion engine (24) comprising:
a driving power transmitting shaft (35) rotatably supported to a crankcase (31) and extending outside from the crankcase (31), the driving power transmitting shaft (35) having a tip end covered with a clutch cover (45) joined to the crankcase (31);
an outer member (66) located between the crankcase (31) and the clutch cover (45), and supported relatively rotatable to the driving power transmitting shaft (35);
a center member (67) supported relatively unrotatable to the driving power transmission shaft (35) inside the outer member (66);
friction members (68) supported to the respective outer member (66) and center member (67) relatively displaceable in an axis direction, a mutual contact in the friction members (68) providing a friction force to transmit a rotational force from the outer member (66) to the center member (67);
a pressure member (71) supported to the center member (67) between a first position and a second position to be relatively displaceable in the axis direction, the mutual contact in the friction members (68) being restrained at the first position by receiving an elastic force from a spring member (69), the friction members (68) being released, at the second position, from the mutual contact against the elastic force; a manipulation member (74) located between the crankcase (31) and the clutch cover (45) to be relatively displaceable in the axis direction, the manipulation member (74) forcibly displacing the pressure member (71) from the first position to the second position according to the axial displacement; and
a lifter plate member (75),
**characterized in that**
the lifter plate member (75) is coupled to the center member (67) in the axis direction at a fulcrum (Ls) that is away by a first distance from a force point (Lf) at which a displacement of the manipulation member (74) is received, wherein the lifter plate member (75) is further coupled to the pressure member (71) in the axis direction at an acting point (Lw) that is away from the fulcrum (Ls) by a second distance shorter than the first distance.

2. The internal combustion engine (24) according to claim 1, wherein the center member (67) includes a first restricting portion (89a) and a second restricting portion (89b), the first restricting portion (89a) supporting a radial outer edge (75b) of the lifter plate member (75), forming the fulcrum (Ls), and restricting a radial displacement of the lifter plate member (75), the second restricting portion (89b) contacting each of right and left edges of the lifter plate member (75) radially inside the fulcrum (Ls) to restrict the displacement of the lifter plate member (75) in a rotation direction.

3. The internal combustion engine (24) according to claim 2, wherein the second restricting portion (89b) is disposed on a boss (81) formed in the center member (67), the boss (81) supporting a bolt (79) that fastens the spring member (69) to the center member (67).

4. The internal combustion engine (24) according to claim 2 or 3, wherein the center member (67) includes a tubular body (77) made of an aluminum-based material and a collar member (81) made of an iron-based material, the tubular body (77) supporting the friction members (68) from radially inside, the collar member (81) being joined to the tubular body (77) and including the second restricting portion (89b).

5. The internal combustion engine (24) according to claim 4, wherein the center member (67) further includes a flange member (84) made of an iron-based material, the flange member (84) being joined to the tubular body (77) with fastening members (83) located in alternation with bosses (81) as said boss (81) in a peripheral direction, the friction members (68) being sandwiched between the flange member (84) and the pressure member (71).

## Patentansprüche

1. Verbrennungsmotor (24), der aufweist:
eine Antriebskraft-Übertragungswelle (35), die rotierbar an einem Kurbelwellengehäuse (31) gehalten wird und außerhalb des Kurbelwellengehäuses (31) verläuft, wobei die Antriebskraft-Übertragungswelle (35) ein Spitzenende hat, das mit einer Kupplungsabdeckung (45) abgedeckt ist, die mit dem Kurbelwellengehäuse (31) verbunden ist;
ein Außenelement (66), das sich zwischen dem Kurbelwellengehäuse (31) und der Kupplungsabdeckung (45) befindet und diesbezüglich rotierbar an der Antriebskraftübertragungswelle (35) gehalten wird;
ein Mittelelement (67), das diesbezüglich nicht rotierbar an der Antriebskraft-Übertragungswelle (35) im Inneren des Außenelements (66) gehalten wird;
Reibungselemente (68), die am jeweiligen Außenelement (66) und Mittelelement (67) diesbezüglich in einer Achsenrichtung versetzbar gehalten werden, wobei ein gegenseitiger Kontakt in den Reibungselementen (68) eine Reibungskraft vorsieht, um eine Rotationskraft vom Außenelement (66) an das Mittelelement (67) zu übertragen;
ein Druckelement (71), das an dem Mittelelement (67) zwischen einer ersten Position und einer zweiten Position gehalten wird, um diesbezüglich versetzbar in der Achsenrichtung gehalten zu werden, wobei der gegenseitige Kontakt in den Reibungselementen (68) an der ersten Position durch Aufnahme einer elastischen Kraft von einem Federelement (69) gehalten wird, wobei die Reibungselemente (68) in einer zweiten Position vom gegenseitigen Kontakt gegen die elastische Kraft gelöst sind; ein Manipulationselement (74), das sich zwischen dem Kurbelwellengehäuse (31) und der Kupplungsverkleidung (45) befindet, um diesbezüglich in der Achsenrichtung versetzbar zu sein, wobei das Manipulationselement (74) mit Kraft das Druckelement (71) von der ersten Position in die zweite Position gemäß der axialen Versetzung versetzt; und
ein Hebeplattenelement (75),
**dadurch gekennzeichnet, dass**
das Hebeplattenelement (75) mit dem Mittelelement (67) in der Achsenrichtung an einem Drehpunkt (Ls) verbunden ist, der um einen Abstand von einem Kraftangriffspunkt (Lf) entfernt ist, an dem eine Versetzung des Manipulationselements (74) aufgenommen wird, wobei das Hebeplattenelement (75) weiterhin mit dem Druckelement (71) in der Achsenrichtung an einem Eingriffspunkt (Lw) verbunden ist, der vom Drehpunkt (Ls) in einem zweiten Abstand kürzer als der erste Abstand entfernt ist.

2. Verbrennungsmotor (24) nach Anspruch 1, wobei das Mittelelement (67) einen ersten Beschränkungsbereich (89a) und einen zweiten Beschränkungsbereich (89b) aufweist, wobei der erste Beschränkungsbereich (89a) eine radiale Außenkante (75b) des Hebeplattenelements (75) hält, das den Drehpunkt (Ls) bildet, und eine radiale Versetzung des Hebeplattenelements (75) beschränkt, wobei der zweite Beschränkungsbereich (89b) mit einer jeden von den rechten und linken Kanten des Hebeplattenelements (75) radial innerhalb des Drehpunkts (Ls) in Kontakt steht, um das Versetzen des Hebeplattenelements (75) in einer Rotationsrichtung zu beschränken.

3. Verbrennungsmotor (24) nach Anspruch 2, wobei der zweite Beschränkungsbereich (82b) an einem runden Vorsprung (81) aufgenommen ist, der im Mittelelement (67) ausgebildet ist, wobei der runde Vorsprung (81) eine Schraube (79) hält, die das Federelement (69) am Mittelelement (67) befestigt.

4. Verbrennungsmotor (24) nach Anspruch 2 oder 3, wobei das Mittelelement (67) einen rohrförmigen Körper (77) aufweist, der aus einem aluminiumbasierten Material hergestellt ist, und ein Ringelement (81), das aus einem eisenbasierten Material hergestellt ist, wobei der röhrenförmige Körper (77) die Reibungselemente (68) radial von der Innenseite hält, das Ringelement (81) mit dem rohrförmigen Körper (77) verbunden ist und den zweiten Beschränkungsbereich (89b) aufweist.

5. Verbrennungsmotor (24) nach Anspruch 4, wobei das Mittelelement (67) weiterhin ein Flanschelement (84) aufweist, das aus einem eisenbasierten Material hergestellt ist, wobei das Flanschelement (84) am rohrförmigen Körper (77) mit Befestigungselementen (83) verbunden ist, die abwechselnd mit runden Vorsprüngen (81) angeordnet sind, wie den runden Vorsprung (81) in der Umfangsrichtung, wobei die Reibungselemente (68) zwischen dem Flanschelement (84) und dem Druckelement (71) angeordnet sind.

## Revendications

1. Moteur à combustion interne (24) comprenant :
un arbre de transmission de la puissance motrice (35) appuyé de façon rotative à un carter-moteur (31) et s'étendant à l'extérieur du carter-moteur (31), l'arbre de transmission de la puissance motrice (35) ayant une extrémité extérieure recouverte d'un couvercle d'embrayage (45) réuni au carter-moteur (31) ;
un élément externe (66) situé entre le carter-moteur (31) et le couvercle d'embrayage (45), et appuyé de façon relativement rotative à l'arbre de transmission de la puissance motrice (35) ;
un élément central (67) appuyé de façon relativement non rotative à l'arbre de transmission de la puissance motrice (35) à l'intérieur de l'élément externe (66) ;
des éléments de frottement (68) appuyés à l'élément externe respectif (66) et à un élément central (67) relativement déplaçables dans une direction d'axe, un contact réciproque dans les éléments de frottement (68) fournissant une force de frottement pour transmettre une force de rotation de l'élément externe (66) à l'élément central (67) ;
un élément de pression (71) appuyé à l'élément central (67) entre une première position et une deuxième position pour être relativement déplaçable dans la direction d'axe, le contact réciproque dans les éléments de frottement (68) étant retenu dans la première position par la réception d'une force élastique d'un élément formant ressort (69), les éléments de frottement (68) étant libérés, dans la deuxième position, du contact réciproque contre la force élastique ; un élément de manœuvre (74) situé entre le carter-moteur (31) et le couvercle d'embrayage (45) pour être relativement déplaçable dans la direction d'axe, l'élément de manœuvre (74) déplaçant par force l'élément de pression (71) de la première position à la deuxième position selon le déplacement axial ; et
un élément formant plaque poussoir (75),
**caractérisé en ce que** l'élément formant plaque poussoir (75) est couplé à l'élément central (67) dans la direction d'axe à un point d'appui (Ls) qui est séparé d'une première distance d'un point de force (Lf) auquel est reçu un déplacement de l'élément de manœuvre (74), dans lequel l'élément formant plaque poussoir (75) est couplé, en outre, à l'élément de pression (71) dans la direction d'axe à un point d'action (Lw) qui est séparé du point d'appui (Ls) d'une deuxième distance inférieure à la première distance.

2. Moteur à combustion interne (24) selon la revendication 1, dans lequel l'élément central (67) comprend une première portion de limitation (89a) et une deuxième portion de limitation (89b), la première portion de limitation (89a) soutenant un bord externe radial (75b) de l'élément formant plaque poussoir (75), formant le point d'appui (Ls), et limitant un déplacement radial de l'élément formant plaque poussoir (75), la deuxième portion de limitation (89b) touchant chacun des bords droit et gauche de l'élément formant plaque poussoir (75), la deuxième portion de limitation (89b) touchant chacun des bords droit et gauche de l'élément formant plaque poussoir (75) radialement à l'intérieur du point d'appui (Ls) pour limiter le déplacement de l'élément formant plaque poussoir (75) dans une direction de rotation.

3. Moteur à combustion interne (24) selon la revendication 2, dans lequel la deuxième portion de limitation (89b) est disposée sur un moyeu (81) formé dans l'élément central (67), le moyeu (81) soutenant un boulon (79) qui fixe l'élément formant ressort (69) à l'élément central (67).

4. Moteur à combustion interne (24) selon la revendication 2 ou 3, dans lequel l'élément central (67) comprend un corps tubulaire (77) fabriqué dans une matière à base d'aluminium et un élément formant collier (81) fabriqué dans une matière à base de fer, le corps tubulaire (77) soutenant les éléments de frottement (68) de l'intérieur radialement, l'élément formant collier (81) étant réuni au corps tubulaire (77) et comprenant la deuxième portion de limitation (89b) .

5. Moteur à combustion interne (24) selon la revendication 4, dans lequel l'élément central (67) comprend, en outre, un élément formant bride (84) fabriqué dans une matière à base de fer, l'élément formant bride (84) étant réuni au corps tubulaire (77) par des éléments de fixation (83) répartis avec des bossages (81), comme lesdits bossages (81), dans une direction tangentielle, les éléments de frottement (68) étant intercalé entre l'élément formant bride (84) et l'élément de pression (71).
